# FASCICULE DE BREVET EUROPEEN

(11) **EP 1 119 756 B1**
(45) Date de publication et mention de la délivrance du brevet: **31.05.2006**
(21) Numéro de dépôt: 99970464.6
(22) Date de dépôt: 07.10.1999
(51) Int. Cl.: G01M 11/00

(54) **GENERATION D'UN TRAIN D'IMPULSIONS ELECTROMAGNETIQUES POUR TEST DE FIBRES OPTIQUES**
ERZEUGUNG EINER ELEKTROMAGNETISCHEN IMPULSFOLGE ZUM PRÜFEN VON GLASFASERN
ELECTROMAGNETIC PULSE TRAIN GENERATION FOR TESTING OPTICAL FIBRES

(30) Priorité: 08.10.1998 FR 9812601
(43) Date de publication de la demande: 01.08.2001
(73) Titulaire: AIRBUS France, 31060 Toulouse Cédex (FR)
(72) Inventeur: DUCHENNE, Bruno, F-31650 Saint Orens de Gameville (FR); ISBERT, Jacques, F-31100 Toulouse (FR)
(74) Mandataire: Bonnetat, Christian
(86) Numéro de dépôt international: PCT/FR1999/002400
(87) Numéro de publication internationale: WO 2000/022402

(56) Documents cités:
- EP-A- 0 184 432
- FR-A- 2 622 979
- US-A- 4 497 575
- US-A- 5 251 002
- COHEN L G: "Shuttle pulse measurements of pulse spreading in an optical fibre" APPLIED OPTICS, JUNE 1975, USA, vol. 14, no. 6, pages 1351-1356, XP002104827 ISSN 0003-6935
- PATENT ABSTRACTS OF JAPAN vol. 002, no. 035 (E-020), 9 mars 1978 (1978-03-09) -& JP 53 001042 A (TOSHIBA CORP), 7 janvier 1978 (1978-01-07)

## Description

La présente invention concerne un dispositif d'émission d'impulsions électromagnétiques, ainsi qu'un système et un procédé de test d'éléments à fibres optiques.

Ledit dispositif du type comportant :
- un générateur d'au moins une impulsion électromagnétique, notamment une impulsion lumineuse ; et
- au moins une fibre optique susceptible de transmettre une impulsion électromagnétique engendrée par ledit générateur, en vue de son émission ,
est susceptible d'être appliqué plus particulièrement, bien que non exclusivement, à un système de test pour déterminer des paramètres caractéristiques, notamment les pertes d'un élément à fibre optique, en particulier un composant fibré, une liaison fibrée ou un réseau à fibre optique.

Par le brevet US-5 251 002, on connaît un tel système de test, qui comporte :
- un tel dispositif d'émission ou source optique susceptible d'émettre une impulsion lumineuse ;
- un photorécepteur susceptible de mesurer des caractéristiques optiques d'une impulsion lumineuse émise par ladite source optique et transmise par un élément à fibre optique ; et
- des moyens d'acquisition, de mémorisation et de traitement de données, qui reçoivent les mesures engendrées par ledit photorécepteur pour ledit élément à fibre optique à tester et pour un élément à fibre optique de référence et qui déterminent à partir de ces mesures les pertes dudit élément à fibre optique à tester.

De façon connue, ladite source optique ou ledit dispositif d'émission présente des conditions d'émission, notamment en ce qui concerne l'angle solide d'émission et la surface d'éclairement, qui sont fixes et uniformes.

Aussi, ledit système de test connu ne permet de réaliser des tests que pour une configuration déterminée du faisceau lumineux utilisé, tel qu'il est émis par ladite source optique. Ce système de test connu met donc en oeuvre un procédé qui ne mesure que les pertes relatives à une seule impulsion déterminée et émise par ladite source optique.

Or, en pratique, la configuration du faisceau lumineux engendré par la source optique n'est pas toujours celle utilisée effectivement dans ledit élément optique à tester. Par conséquent, la fiabilité de ce système de test n'est pas satisfaisante.

Pour augmenter la fiabilité, il est nécessaire d'échantillonner convenablement les conditions d'éclairement ou d'émission précitées, qui peuvent varier de 0% à 100% de la surface du coeur pour la surface d'émission, et de 0% à 100% de l'ouverture numérique pour l'angle solide d'émission. Dans les cas rencontrés habituellement, les conditions peuvent varier de 70% à 100%.

A cet effet, il est conseillé de prévoir un pas d'échantillonnage de 2% au plus. Ceci suppose donc d'utiliser au moins une quinzaine de sources optiques différentes, dont chacune présente des conditions d'éclairement appropriées, pour obtenir un échantillonnage satisfaisant.

Cette solution n'est donc guère satisfaisante, notamment en raison d'un coût et d'une durée de mise en oeuvre élevés et de manipulations importantes.

Par un article de Cohen L.G., qui est intitulé "Shuttle pulse measurements of pulse spreading in an optical fiber" et qui est paru dans la publication "Applied Optics", juin 1975, volume 14, numéro 6, pages 1351 à 1356, on connaît un dispositif pour déterminer la relation entre la longueur d'une fibre optique et la dispersion d'une impulsion électromagnétique qui traverse cette fibre optique. Ce dispositif connu comporte un générateur laser, un dispositif de détection à diode, un amplificateur d'impulsion et des moyens de prélèvement et de traitement. La fibre optique qui est couplée au générateur laser et au dispositif de détection est reliée par ses extrémités à des miroirs partiellement transparents. Cet ensemble (fibre optique, miroirs) permet de produire un train d'impulsions, dont chaque impulsion parcourt une distance différente dans la fibre optique. Ceci évite d'avoir à utiliser successivement des fibres optiques de différentes longueurs pour déterminer la relation précitée entre la longueur de fibre optique et la dispersion d'une impulsion électromagnétique.

Par ailleurs, par le document FR-A-2 622 979, on connaît un dispositif optique à cavité résonante, qui est un dispositif passif et non une source optique. Ce dispositif optique connu comporte des moyens pour coupler une fibre optique à la cavité résonante, moyens qui comprennent une lentille à gradient d'indice. Cette lentille est munie d'un évidemment pourvu d'un écran en matériau absorbant, destiné à supprimer la réflexion de Fresnel.

En outre, le document US-A-4 497 575 divulgue un dispositif de calibration pour calibrer un réflecteur comprenant une source d'impulsions lumineuses, un détecteur lumineux, un moyen de couplage optique et un moyen d'affichage.

Par ailleurs, le document JP-A-53001042 prévoit de déterminer des caractéristiques de transmission d'une fibre optique.

La présente invention a pour objet de remédier aux inconvénients précités, et notamment à ceux liés à l'existence de conditions d'émission fixes et uniformes de la source optique.

Elle concerne un dispositif d'émission d'impulsions électromagnétiques, susceptible d'émettre des impulsions électromagnétiques présentant des caractéristiques d'étendue géométrique d'émission (angle solide d'émission, surface d'émission) qui sont variables.

A cet effet, selon l'invention, ledit dispositif d'émission d'impulsions électromagnétiques comportant :
- un générateur d'au moins une impulsion électromagnétique ;
- au moins une fibre optique susceptible de transmettre une impulsion électromagnétique engendrée par ledit générateur, en vue de son émission ; et
- au moins une cavité optique :
   - qui est agencée sur le trajet d'une impulsion électromagnétique incidente transmise par ladite fibre optique ; et
   - qui comporte une entrée munie d'un premier miroir partiellement réfléchissant et une sortie munie d'un second miroir partiellement réfléchissant, lesdits premier et second miroirs étant agencés de manière à créer à la sortie de ladite cavité optique, à partir d'une seule impulsion électromagnétique incidente, un train d'impulsions électromagnétiques émises,
est remarquable en ce que ladite fibre optique comporte un premier tronçon qui est agencé entre ledit générateur et ledit premier miroir, un second tronçon qui est agencé entre lesdits premier et second miroirs, et un troisième tronçon qui est agencé en aval dudit second miroir, et en ce que la longueur dudit second tronçon de fibre optique, agencé entre lesdits premier et second miroirs, et le rapport de transmission/réflexion desdits premier et second miroirs sont tels que ledit train d'impulsions électromagnétiques comporte des impulsions électromagnétiques émises, dont l'angle solide d'émission et la surface d'émission sont variables et précisément définis.

Ainsi, grâce à ladite cavité optique, le train d'impulsions émis comporte des impulsions soumises à des nombres variables de réflexions sur lesdits miroirs et parcourant donc dans ladite cavité des distances variables. Or, comme de façon connue les caractéristiques d'étendue géométrique précitées varient en fonction de la distance parcourue, les différentes impulsions dudit train d'impulsions présentent des caractéristiques d'étendue géométrique (angle solide d'émission, surface d'émission) variables.

Par conséquent, en choisissant des caractéristiques appropriées de ladite cavité optique, et notamment le rapport réflexion/transmission des miroirs partiellement réfléchissants et la distance entre ces derniers, on est en mesure de former une pluralité d'impulsions présentant des caractéristiques d'émission prédéterminées.

En particulier, lorsque ledit dispositif d'émission est appliqué à un système de test du type précité, on peut former un train d'impulsions particulier, comprenant les différentes configurations possibles pour les faisceaux lumineux susceptibles d'être transmis par l'élément à tester.

Ceci permet de remédier aux inconvénients précités du système de test connu et décrit en particulier dans le brevet US-5 251 002, puisqu'il n'est plus nécessaire de prévoir une pluralité de sources optiques différentes pour réaliser un test global.

Par ailleurs, de façon avantageuse, au moins l'un desdits premier et second miroirs est relié à deux tronçons de la fibre optique :
- dans un premier mode de réalisation, directement par des faces opposées ; et
- dans un second mode de réalisation, par l'intermédiaire d'un moyen de couplage optique associé.

Dans ce second mode de réalisation, ledit ou chacun desdits moyens de couplage optique comporte avantageusement :
- dans une première variante de réalisation, deux lentilles reliant optiquement lesdits deux tronçons de la fibre optique, le miroir associé audit moyen de couplage optique étant agencé entre lesdites lentilles ;
- dans une deuxième variante de réalisation, une seule lentille à gradient d'indice à demi-onde, ledit miroir étant agencé sur la face dudit moyen de couplage optique, interne à ladite cavité optique ; et
- dans une troisième variante de réalisation, deux lentilles à gradient d'indice à quart d'onde, reliant optiquement lesdits deux tronçons de la fibre optique, le miroir associé audit moyen de couplage optique étant agencé entre lesdites lentilles.

Par ailleurs, de façon avantageuse, le dispositif conforme à l'invention comporte des moyens empêchant un retour vers ledit générateur d'une impulsion engendrée par ce dernier. A cet effet, lesdits moyens comprennent, de préférence, au moins un piège à lumière qui coopère avec le moyen de couplage optique associé audit premier miroir.

En outre, avantageusement, ledit générateur est susceptible d'engendrer au moins deux impulsions, de longueurs d'onde différentes, ce qui permet notamment, lors de l'application à un système de test, de mesurer simultanément les pertes à plusieurs longueurs d'onde de fonctionnement de certains types de liaisons, comme par exemple des liaisons de vidéocommunication fonctionnant à des longueurs d'onde de 0,85 *µ*m et 1,3 *µ*m.

La présente invention concerne également un système de test du type comportant :
- une source optique susceptible d'émettre au moins une impulsion électromagnétique ;
- un photorécepteur susceptible de mesurer des caractéristiques d'une impulsion électromagnétique émise par ladite source optique et transmise par un élément à fibre optique ; et
- des moyens d'acquisition, de mémorisation et de traitement de données qui reçoivent les mesures engendrées par ledit photorécepteur.

Selon l'invention, ledit système de test est remarquable en ce que la source optique de ce système comporte un dispositif d'émission d'impulsions lumineuses, tel que celui mentionné ci-dessus, et en ce que lesdits moyens d'acquisition, de mémorisation et de traitement de données reçoivent les mesures engendrées par ledit photorécepteur, à la fois pour un élément à fibre optique à tester et pour un élément à fibre optique de référence, et déterminent, à partir de ces mesures, les pertes dudit élément à fibre optique à tester.

En plus des avantages indiqués précédemment, ce système de test conforme à l'invention présente une durée de fonctionnement (ou une durée de vie) plus importante que celui décrit dans le brevet US-5 251 002. En effet, ce dernier système connu qui comporte des commutateurs électro-optiques ne permet qu'un nombre relativement réduit d'utilisations et de plus il est sensible aux conditions d'environnement, ce qui n'est pas le cas du système conforme à l'invention, qui ne comporte pas d'élément mécanique en mouvement.

On notera de plus que la fibre optique du dispositif d'émission d'impulsions présente généralement des caractéristiques (diamètre de coeur et ouverture numérique) identiques à celles de l'élément à fibre optique à tester. Ceci permet de faire varier au cours du temps, dans le même sens, la surface d'émission et l'angle solide d'émission, ces deux dernières caractéristiques d'étendue géométrique diminuant pour chacune des impulsions successives.

Toutefois, dans un mode de réalisation particulier, on forme le dispositif d'émission d'impulsions électromagnétiques de sorte que l'une desdites caractéristiques d'étendue géométrique est constante et l'autre variable.

A cet effet, selon l'invention :
- pour obtenir un angle solide d'émission constant, on prévoit une fibre optique présentant le même diamètre de coeur que le diamètre de coeur de l'élément à fibre optique à tester, mais une ouverture numérique qui est supérieure ; et
- pour obtenir une surface d'émission constante, on prévoit une fibre optique présentant la même ouverture numérique, mais un diamètre de coeur supérieur par rapport à l'élément à tester.

En outre, avantageusement, ledit système de test comporte, de plus, une embase universelle permettant de relier ledit élément à fibre optique à tester et ledit élément à fibre optique de référence audit troisième tronçon de fibre optique et à un tronçon de fibre optique qui est solidaire dudit photorécepteur.

Par ailleurs, la présente invention concerne également un procédé de test pour déterminer la valeur d'au moins un paramètre caractéristique, tel que l'atténuation de l'intensité électromagnétique, d'un élément à fibre optique, procédé qui permet notamment de remédier aux inconvénients précités du procédé connu et mis en oeuvre par le système de test décrit dans le brevet US-5 251 002.

Ce procédé connu réalise en effet des mesures, comme indiqué précédemment, pour un seul type d'impulsion. Aussi, lorsqu'on nécessite des informations pour une pluralité d'impulsions différentes, il est nécessaire de mettre en oeuvre ledit procédé connu pour chacune desdites impulsions. De plus, pour pouvoir adapter ou comparer les résultats obtenus alors, il convient de créer pour chacun de ces différents tests les mêmes conditions de mise en oeuvre, ce qui est long, fastidieux et source d'erreurs.

Afin de remédier à ces inconvénients, selon l'invention, ledit procédé pour déterminer la valeur d'au moins un paramètre caractéristique d'un élément à fibre optique, est tel que :
a) on engendre au moyen d'un dispositif d'émission d'impulsions lumineuses, tel que celui mentionné ci-dessus, un train d'impulsions électromagnétiques, dont au moins certaines des impulsions électromagnétiques présentent des valeurs différentes pour au moins une caractéristique optique, et on émet ledit train d'impulsions électromagnétiques dans un élément à fibre optique ;
b) on réalise des mesures relatives audit train d'impulsions électromagnétiques transmis par ledit élément à fibre optique ; et
c) on détermine la valeur dudit paramètre caractéristique pour chacune desdites impulsions électromagnétiques différentes dudit train d'impulsions.

Ainsi, grâce à l'invention, on réalise, en une seule mise en oeuvre du procédé, des tests pour une pluralité d'impulsions différentes, ce qui entraîne de nombreux avantages, et notamment une réduction de la durée et du coût des tests lorsque ceux-ci doivent être réalisés pour une pluralité d'impulsions différentes, ainsi qu'une augmentation de la précision, puisqu'il n'est plus nécessaire d'essayer de recréer des conditions de mise en oeuvre identiques pour une pluralité de tests différents.

Comme indiqué précédemment, pour engendrer ledit train d'impulsions :
- on forme à partir d'une impulsion électromagnétique incidente une pluralité d'impulsions ; et
- on fait parcourir auxdites impulsions des distances différentes dans au moins une fibre optique, lesdites impulsions formant à la sortie de ladite fibre optique ledit train d'impulsions.

Ceci est réalisé en utilisant le dispositif précité et conforme à l'invention.

De plus, avantageusement, ledit paramètre caractéristique représente les pertes dudit élément à fibre optique et, à l'étape b), on réalise des mesures pour ledit élément à fibre optique et pour un élément à fibre optique de référence.

Les figures du dessin annexé feront bien comprendre comment l'invention peut être réalisée. Sur ces figures, des références identiques désignent des éléments semblables.

La figure 1 représente un dispositif conforme à l'invention.

Les figures 2 à 4 représentent respectivement, de façon schématique et non exhaustive, trois modes de réalisation différents d'un dispositif conforme à l'invention.

La figure 5 représente schématiquement un système de test conforme à l'invention d'un élément à fibre optique.

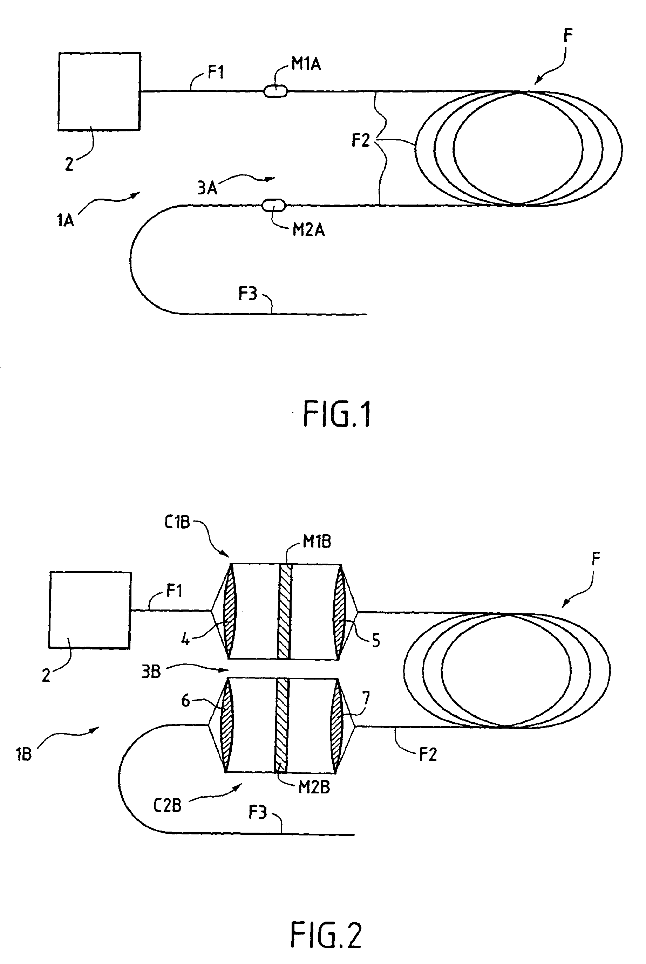

Le dispositif conforme à l'invention 1A, 1B, 1C et 1D, représenté respectivement sur les figures 1 à 4, est destiné à émettre des impulsions électromagnétiques, en l'occurrence des impulsions lumineuses.

Ledit dispositif 1 A à 1 D est du type comportant :
- un générateur 2, par exemple une diode électroluminescente, une diode laser ou une diode superluminescente, susceptible d'engendrer une impulsion lumineuse ; et
- une fibre optique F reliée au générateur 2 et susceptible de transmettre une impulsion lumineuse engendrée par ledit générateur 2, en vue de son émission.

Les caractéristiques d'étendue géométrique d'émission de ce générateur 2 sont, de façon connue, fixes et uniformes en ce qui concerne l'angle solide d'émission et la surface d'émission.

Selon l'invention, pour obtenir des caractéristiques d'étendue géométrique variables, ledit dispositif 1 A à 1 D comporte, de plus, une cavité optique 3A à 3D.

Chacune desdites cavités optiques 3A à 3D comprend :
- un premier miroir, respectivement M1A, M1B, M1C et M1D, du type partiellement réfléchissant, qui est agencé entre deux tronçons F1 et F2 de la fibre optique F, ledit tronçon F1 étant relié au générateur 2 de façon connue ;
- un second miroir, respectivement M2A, M2B, M2C et M2D, pouvant être de même type que ledit premier miroir, qui est agencé entre le tronçon F2 et un tronçon F3 de la fibre optique F ; et
- ledit tronçon F2 qui permet de relier ensemble lesdits premier et second miroirs.

Ainsi, une impulsion lumineuse qui est engendrée par le générateur 2 et pénètre dans la cavité optique 3A à 3D est partiellement transmise par le miroir M2A à M2D et partiellement réfléchie par ce dernier, la partie réfléchie étant ensuite également partiellement réfléchie par le miroir M1A à M1D de manière à revenir vers ledit miroir M2A à M2D où elle est de nouveau partiellement réfléchie et partiellement transmise, et ainsi de suite, ce qui permet de produire à la sortie de la cavité optique 3A à 3D un train d'impulsions décalées temporellement.

Chacune desdites impulsions a donc parcouru un trajet de longueur différente dans le tronçon F2.

Or, la théorie [S.D Personick, Bell Syst Tech J. 50, 843, (1971)] confirmée par l'expérimentation démontre que les conditions de propagation d'une onde lumineuse dans une fibre optique varient en fonction de la longueur de la fibre, en l'occurrence du tronçon F2. Cette variation (élargissement temporel de l'impulsion injectée ou variation de l'étendue géométrique : diamètre de coeur et ouverture numérique liée à l'angle solide) est une variation en fonction de la longueur jusqu'à une longueur de fibre définie comme longueur d'équilibre modal, et au-delà la variation de l'élargissement de l'impulsion est fonction de la racine carrée de la longueur et l'étendue géométrique est constante. Cet état d'équilibre modal est atteint lorsque la lumière mélangée dans un mode est compensée statistiquement par la lumière qui s'en échappe.

Par conséquent, les différentes impulsions du train d'impulsions, émis par le dispositif 1 A à 1 D, présentent des caractéristiques d'étendue géométrique d'émission variables.

Ainsi, par un choix approprié de la cavité optique 3A à 3D, notamment en ce qui concerne la longueur du tronçon F2 et le rapport de transmission/réflexion desdits premier et second miroirs, on est en mesure de définir précisément les caractéristiques d'étendue géométrique des différentes impulsions émises et ainsi d'obtenir, grâce à l'invention, à partir d'une seule impulsion engendrée par le générateur 2, un train d'impulsions variables et précisément définies.

On notera que la génération par une cavité optique de longueur ℓ, à partir d'une impulsion injectée, d'un train d'impulsions, permet d'obtenir, pour l'impulsion de sortie de rang N, l'équivalent de propagation (dispersion modale, chromatique, évolution de l'étendue géométrique) dans une fibre de longueur ℓ (2N-1).

A titre d'exemple, le dispositif 1 A à 1 D conforme à l'invention permet d'émettre un train d'impulsions engendrant une quinzaine de caractéristiques d'émission différentes, comprises entre les limites suivantes :
- 70% à 100% de l'ouverture numérique d'une fibre optique éclairée ; et
- 70% à 100% du diamètre de coeur de ladite fibre optique éclairée.

Dans le mode de réalisation représenté sur la figure 1, les miroirs M1A et M2A comportent chacun une couche de matériau partiellement réfléchissant qui est déposé directement sur un tronçon de la fibre optique F et les tronçons adjacents sont collés l'un contre l'autre, tandis que dans les modes de réalisation des figures 2 à 4, les miroirs M1B, M2B, M1C, M2C, M1D et M2D sont associés respectivement à des moyens de couplage optique C1B, C2B, C1C, C2C, C1D et C2D précisés ci-dessous.

Comme on peut le voir sur la figure 2, les moyens de couplage C1B et C2B comportent chacun deux lentilles 4, 5 et 6, 7, par exemple des lentilles sphériques ou asphériques, entre lesquelles est agencé le miroir M1B, M2B correspondant.

De plus, la lentille 4 est reliée au tronçon F1, les lentilles 5 et 7 au tronçon F2 et la lentille 6 au tronçon F3, de manière connue.

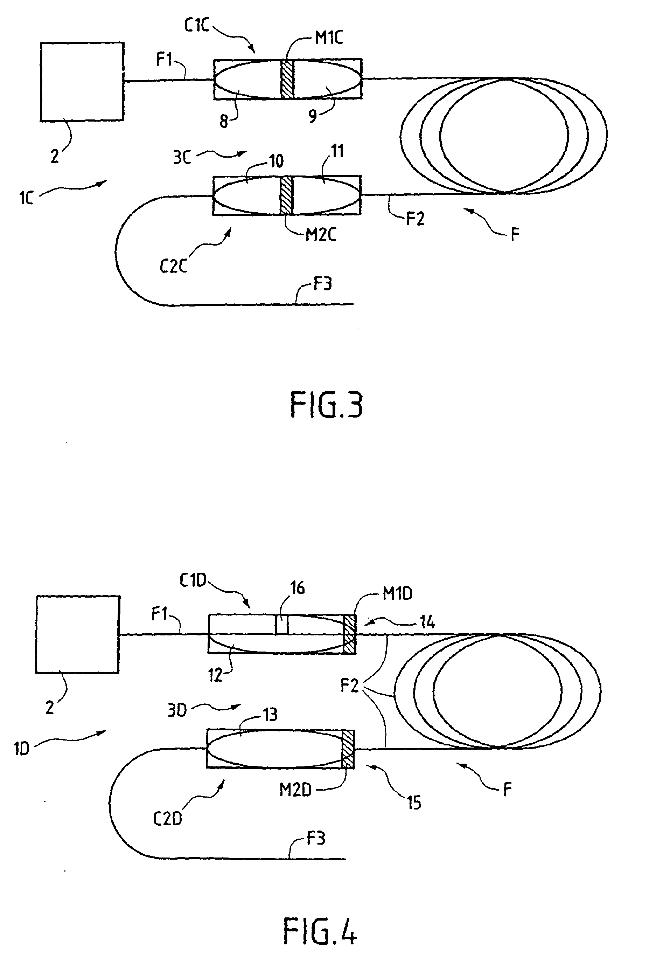

En outre, les moyens de couplage optique C1C et C2C comportent chacun deux lentilles 8, 9 et 10, 11 du type à gradient d'indice, à quart d'onde, reliées aux tronçons F1 à F3 de la fibre optique F et entre lesquelles est agencé le miroir M1C, M2C correspondant, comme représenté sur la figure 3.

Quant aux moyens de couplage optique C1 D et C2D montrés sur la figure 4, ils comportent chacun une lentille 12, 13 du type à gradient d'indice à demi-onde, et les miroirs M1D et M2D correspondants sont agencés sur les faces 14 et 15 desdits moyens de couplage optique C1 D et C2D, qui sont internes à la cavité optique 3D.

De plus, ledit moyen C1 D comporte un piège à lumière 16 destiné à éliminer la lumière qui est réfléchie par le miroir M1D et donc à empêcher un retour vers le générateur 2 d'une impulsion émise par ce dernier ou d'une partie de cette impulsion. Bien entendu, un tel piège à lumière peut être prévu sur les différents modes de réalisation possibles.

En outre, on notera que, selon l'invention :
- les techniques d'alignement et de montage entre les tronçons de fibre optique et les moyens de couplage peuvent être de tout type connu ;
- le dépôt des couches réfléchissantes des miroirs peut être effectué soit sur les deux extrémités de la fibre F2 de la cavité optique, soit sur les moyens de couplage ;
- la longueur de la fibre optique F2 de la cavité optique peut être choisie dans une large plage de valeurs. A titre d'exemple, cette longueur peut être égale à 50 mètres ;
- le dispositif 1 A à 1 D s'applique à tout type de fibre optique F multimode, quel que soit son diamètre de coeur et de gaine, et quel que soit le matériau utilisé pour sa réalisation (silice, silicone, polymère) ; et
- ledit dispositif 1 A à 1D ne comprend pas d'élément mécanique en mouvement, source de panne.

On notera de plus que de très nombreuses applications du dispositif 1 A à 1 D précité sont possibles, notamment pour réaliser des mesures, et en particulier pour mesurer différents paramètres caractéristiques tels que :
- l'atténuation de composants ou de harnais à fibres optiques ou de réseaux fibrés multimode ;
- la fonction de transfert modal de composants ou de harnais à fibres optiques ;
- le taux d'erreur d'une liaison à fibre optique ; ou
- la bande passante d'une fibre optique multimode.

A cet effet, la présente invention concerne également un procédé pour mesurer un tel paramètre caractéristique d'un élément à fibre optique, et notamment les pertes de ce dernier.

Plus précisément, elle concerne un procédé selon lequel :
a) on engendre au moins une impulsion électromagnétique, notamment lumineuse, que l'on émet dans ledit élément à fibre optique ;
b) on réalise des mesures relatives à ladite impulsion électromagnétique transmise par ledit élément à fibre optique ; et
c) on détermine ledit paramètre caractéristique au moins à partir desdites mesures.

Selon l'invention, à l'étape a), on engendre un train d'impulsions électromagnétiques, dont au moins certaines des impulsions électromagnétiques présentent des valeurs différentes pour au moins une caractéristique optique, notamment une caractéristique d'étendue géométrique d'émission, et, à l'étape c), on détermine la valeur dudit paramètre caractéristique pour chacune desdites impulsions électromagnétiques différentes dudit train d'impulsions.

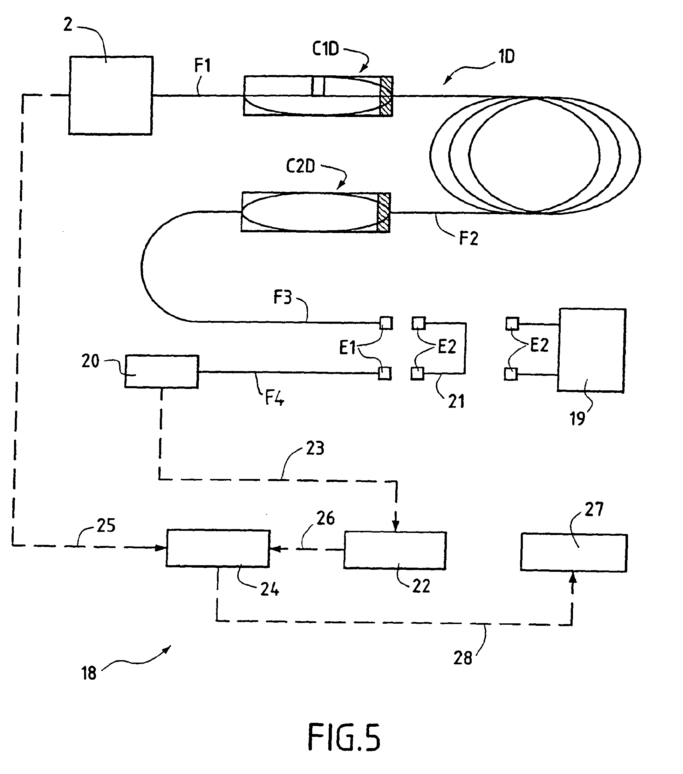

Sur la figure 5, on a représenté un système de test 18 conforme à l'invention, qui permet de mettre en oeuvre le procédé précité et qui est destiné à déterminer les pertes d'un élément 19 à fibre optique, par exemple un composant fibré, une liaison fibrée ou un réseau à fibre optique.

A cet effet, ledit système 18 comporte selon l'invention :
- un dispositif d'émission d'impulsions lumineuses tel que précité, conforme à l'invention et correspondant en l'occurrence, à titre d'exemple, à celui du mode de réalisation 1 D de la figure 4 ;
- un photorécepteur 20, de type connu, par exemple une photodiode PIN ou une photodiode APD, susceptible de mesurer des caractéristiques telles que l'intensité d'une impulsion lumineuse qui est émise par ledit dispositif 1 D et qui est transmise par un élément 19 ou 21 à fibre optique ;
- des moyens 22, par exemple une mémoire, reliés par une liaison électrique 23 au photorécepteur 20 et destinés à enregistrer les mesures réalisées par ledit photorécepteur 20 ; et
- des moyens 24 reliés respectivement par des liaisons électriques 25 et 26 au générateur 2 et aux moyens 22 et déterminant à partir des mesures reçues et effectuées par le photorécepteur 20, d'une part pour ledit élément 19 à tester, et, d'autre part, pour un élément de référence 21, par exemple une simple fibre optique de courte longueur, les pertes dudit élément 19.

Les résultats des tests ainsi réalisés peuvent être affichés par des moyens 27 reliés par l'intermédiaire d'une liaison électrique 28 auxdits moyens 24.

Pour réaliser les mesures, les éléments 19 et 21 peuvent être reliés au tronçon F3 et à un tronçon F4 (solidaire du photorécepteur 20) de la fibre optique, par l'intermédiaire de moyens E1, E2 connus, coopérant ensemble et formant par exemple une embase universelle.

Le tronçon F3 et l'élément 19 présentent le même diamètre de coeur et la même ouverture numérique. Toutefois, dans le cadre de la présente invention, l'une de ces caractéristiques peut également être différente d'un élément à l'autre, pour obtenir simultanément une caractéristique d'étendue géométrique (la surface d'émission par exemple) constante et une caractéristique d'étendue géométrique (l'angle solide d'émission par exemple) variable.

## Revendications

1. Dispositif d'émission d'impulsions électromagnétiques, ledit dispositif comportant :
- un générateur (2) d'au moins une impulsion électromagnétique ;
- au moins une fibre optique (F) susceptible de transmettre une impulsion électromagnétique engendrée par ledit générateur (2), en vue de son émission ; et
- au moins une cavité optique (3A, 3B, 3C, 3D) :
. qui est agencée sur le trajet d'une impulsion électromagnétique incidente transmise par ladite fibre optique (F) ; et
. qui comporte une entrée munie d'un premier miroir (M1A, M1B, M1C,) partiellement réfléchissant et une sortie munie d'un second miroir (M2A, M2B, M2C, M2D) partiellement réfléchissant, lesdits premier et second miroirs étant agencés de manière à créer à la sortie de ladite cavité optique (3A, 3B, 3C, 3D), à partir d'une seule impulsion électromagnétique incidente, un train d'impulsions électromagnétiques émises,
**caractérisé en ce que** ladite fibre optique (F) comporte un premier tronçon (F1) qui est agencé entre ledit générateur (2) et ledit premier miroir, un second tronçon (F2) qui est agencé entre lesdits premier et second miroirs, et un troisième tronçon (F3) qui est agencé en aval dudit second miroir, et **en ce que** la longueur dudit second tronçon (F2) de fibre optique (F), agencé entre lesdits premier et second miroirs, et le rapport de transmission/réflexion desdits premier et second miroirs sont tels que ledit train d'impulsions électromagnétiques comporte des impulsions électromagnétiques émises, dont l'angle solide d'émission et la surface d'émission sont variables et précisément définis.

2. Dispositif selon la revendication 1,
**caractérisé en ce qu'**au moins l'un desdits premier et second miroirs (M1A, M2A) est relié directement par des faces opposées à deux tronçons (F1, F2, F3) de ladite fibre optique (F).

3. Dispositif selon la revendication 1,
**caractérisé en ce qu'**au moins l'un desdits premier et second miroirs (M1B, M2B, M1C, M2C, M1D, M2D) est relié, par l'intermédiaire d'un moyen de couplage optique (C1B, C2B, C1C, C2C, C1D, C2D) associé, à deux tronçons (F1, F2, F3) de ladite fibre optique (F).

4. Dispositif selon la revendication 3,
**caractérisé en ce que** ledit moyen de couplage optique (C1 B, C2B) comporte deux lentilles (4 à 7) reliant optiquement lesdits deux tronçons (F1, F2, F3) de la fibre optique (F), le miroir (M1B, M2B) associé audit moyen de couplage optique (C1B, C2B) étant agencé entre lesdites lentilles (4 à 7).

5. Dispositif selon la revendication 3,
**caractérisé en ce que** ledit moyen de couplage optique (C1 C,C2C) comporte deux lentilles (8,9 ; 10,11) à gradient d'indice, à quart d'onde, reliées à deux tronçons de la fibre optique (F), et entre lesquelles est agencé le miroir (M1C, M2C) correspondant.

6. Dispositif selon la revendication 3,
**caractérisé en ce que** ledit moyen de couplage optique (C1D, C2D) comporte une lentille (12, 13) à gradient d'indice, à demi-onde, et **en ce que** le miroir (M1D, M2D) correspondant est agencé sur la face (14,15) dudit moyen de couplage optique (C1D, C2D) qui est interne à la cavité optique (3D).

7. Dispositif selon l'une quelconque des revendications précédentes,
**caractérisé en ce qu'**il comporte des moyens (16) empêchant un retour vers ledit générateur (2) d'une impulsion électromagnétique engendrée par ce dernier.

8. Dispositif selon l'une quelconque des revendications précédentes,
**caractérisé en ce que** ledit générateur (2) est susceptible d'engendrer au moins deux impulsions, de longueurs d'onde différentes.

9. Système de test comportant :
- une source optique (1D) susceptible d'émettre au moins une impulsion électromagnétique ;
- un photorécepteur (20) susceptible de mesurer des caractéristiques d'une impulsion électromagnétique émise par ladite source optique (1 D) et transmise par un élément à fibre optique (19, 21) ; et
- des moyens (22, 24) d'acquisition, de mémorisation et de traitement de données qui reçoivent les mesures engendrées par ledit photorécepteur (20),
**caractérisé en ce que** ladite source optique comporte le dispositif (1 D) spécifié sous l'une quelconque des revendications 1 à 8, et **en ce que** lesdits moyens (22, 24) d'acquisition, de mémorisation et de traitement de données reçoivent les mesures engendrées par ledit photorécepteur (20), à la fois pour un élément (19) à fibre optique à tester et pour un élément (21) à fibre optique de référence, et déterminent, à partir de ces mesures, les pertes dudit élément (19) à fibre optique à tester.

10. Système de test selon la revendication 9,
**caractérisé en ce que** la fibre optique (F) du dispositif (1D) d'émission d'impulsions électromagnétiques présente au moins deux caractéristiques, le diamètre de coeur et l'ouverture numérique, qui sont prédéterminées, et **en ce que** l'une desdites caractéristiques de ladite fibre optique (F) est identique à celle de l'élément (19) à fibre optique à tester et l'autre est différente.

11. Système de test selon l'une des revendications 9 et 10,
**caractérisé en ce qu'**il comporte, de plus, une embase universelle permettant de relier ledit élément (19) à fibre optique à tester et ledit élément (21) à fibre optique de référence audit troisième tronçon (F3) de fibre optique et à un tronçon (F4) de fibre optique qui est solidaire dudit photorécepteur (20).

12. Procédé pour déterminer la valeur d'au moins un paramètre caractéristique d'un élément à fibre optique, procédé selon lequel :
a) on engendre au moyen du dispositif spécifié sous l'une quelconque des revendications 1 à 8, un train d'impulsions électromagnétiques, dont au moins certaines des impulsions électromagnétiques présentent des valeurs différentes pour au moins une caractéristique optique, et on émet ledit train d'impulsions électromagnétiques dans un élément (19) à fibre optique ;
b) on réalise des mesures relatives audit train d'impulsions électromagnétiques transmis par ledit élément (19) à fibre optique ; et
c) on détermine la valeur dudit paramètre caractéristique pour chacune desdites impulsions électromagnétiques différentes dudit train d'impulsions.

## Claims

1. Emitter for emitting electromagnetic pulses, said emitter comprising:
- a generator (2) for generating at least one electromagnetic pulse;
- at least one optical fibre (F) capable of transmitting an electromagnetic pulse generated by said generator (2) for the purpose of injecting it; and
- at least one optical cavity (3A, 3B, 3C, 3D):
• which is placed in the path of an incident electromagnetic pulse transmitted by said optical fibre (F); and
• which has an input provided with a first partially reflecting mirror (M1A, M1B, M1C) and an output provided with a second partially reflecting mirror (M2A, M2B, M2C, M2D), said first and second mirrors being arranged so as to create at the output of said optical cavity (3A, 3B, 3C, 3D), from a single incident electromagnetic pulse, a train of emitted electromagnetic pulses,
**characterized in that** said optical fibre (F) comprises a first length (F1) that is placed between said generator (2) and said first mirror, a second length (F2) that is placed between said first and second mirrors and a third length (F3) that is placed downstream of said second mirror and **in that** the length of said second length (F2) of optical fibre (F), placed between first and second mirrors, and the transmission/reflection ratio of said first and second mirrors are such that said electromagnetic pulse train comprises emitted electromagnetic pulses, the emission solid angle and the emission area of which are variable and precisely defined.

2. Emitter according to Claim 1,
**characterized in that** at least one of said first and second mirrors (M1A, M2A) is linked directly by opposed faces to two lengths (F1, F2, F3) of said optical fibre (F).

3. Emitter according to Claim 1,
**characterized in that** at least one of said first and second mirrors (M1B, M2B, M1C, M2C, M1D, M2D) is linked, via an associated optical coupling means (C1B, C2B, C1C, C2C, C1D, C2D), to two lengths (F1, F2, F3) of said optical fibre (F).

4. Emitter according to Claim 3,
**characterized in that** said optical coupling means (C1B, C2B) comprises two lenses (4 to 7) optically linking said two lengths (F1, F2, F3) of the optical fibre (F), the mirror (M1B, M2B) associated with said optical coupling means (C1B, C2B) being placed between said lenses (4 to 7) .

5. Emitter according to Claim 3,
**characterized in that** said optical coupling means (C1C, C2C) comprises two quarter-wave graded-index lenses (8, 9; 10, 11) linked to two lengths of the optical fibre (F), between which lenses the corresponding mirror (M1C, M2C) is placed.

6. Emitter according to Claim 3,
**characterized in that** said optical coupling means (C1D, C2D) comprises a single half-wave graded-index lens (12, 13) and **in that** the corresponding mirror (M1, M2D) is placed on that face (14, 15) of said optical coupling means (C1D, C2D) which is internal to the optical cavity (3D).

7. Emitter according to any one of the preceding claims,
**characterized in that** it comprises means (16) preventing an electromagnetic pulse generated by said generator (2) from returning toward the latter.

8. Emitter according to any one of the preceding claims,
**characterized in that** said generator (2) is capable of generating at least two pulses, of different wavelengths.

9. Test system comprising:
- an optical source (1D) capable of emitting at least one electromagnetic pulse;
- a photoreceiver (20) capable of measuring characteristics of an electromagnetic pulse emitted by said optical source (1D) and transmitted by a fibre-optic component (19, 21); and
- data acquisition, storage and processing means (22, 24) which receive the measurements generated by said photoreceiver (20),
**characterized in that** said optical source comprises the emitter (1D) specified under any one of Claims 1 to 8, and **in that** said data acquisition, storage and processing means (22, 24) receive the measurements generated by said photoreceiver (20) both in the case of a fibre-optic component (19) to be tested and in the case of a reference fibre-optic component (21) and determine, on the basis of these measurements, the losses of said fibre-optic component (19) to be tested.

10. Test system according to Claim 9,
**characterized in that** the optical fibre (F) of the emitter (1D) for emitting electromagnetic pulses has at least two characteristics, the core diameter and the numerical aperture, which are predetermined and **in that** one of said characteristics of said optical fibre (F) is identical to that of the fibre-optic component (19) to be tested and the other is different.

11. Test system according to either of Claims 9 and 10,
**characterized in that** it includes, in addition, a universal connector allowing said fibre-optic component (19) to be tested and said reference fibre-optic component (21) to be connected to said third length (F3) of optical fibre and to a length (F4) of optical fibre that is fastened to said photoreceiver (20).

12. Method for determining the value of at least one characteristic parameter of a fibre-optic component, in which method:
a) an electromagnetic pulse train is generated by means of the emitter specified under any one of Claims 1 to 8, at least some of the electromagnetic pulses of which have different values for at least one optical characteristic, and said electromagnetic pulse train is injected into a fibre-optic component (19);
b) measurements relating to said electromagnetic pulse train transmitted by said fibre-optic component (19) are carried out; and
c) the value of said characteristic parameter is determined for each of said different electromagnetic pulses of said pulse train.

## Patentansprüche

1. Vorrichtung zur Emission von elektromagnetischen Impulsen, wobei die Vorrichtung aufweist:
- einen Generator (2) von wenigstens einem elektromagnetischen Impuls;
- wenigstens eine Lichtleitfaser (F), die geeignet ist, einen von dem Generator (2) erzeugten elektromagnetischen Impuls zum Zwecke seiner Emission zu übertragen; und
- wenigstens einen optischen Resonator (3A, 3B, 3C, 3D):
der auf dem Weg eines einfallenden elektromagnetischen Impulses angeordnet ist, der von der Lichtleitfaser (F) übertragen wird; und
der einen Eingang mit einem ersten teilweise reflektierenden Spiegel (M1A, M 1 B, M 1 C) und einen Ausgang mit einem zweiten teilweise reflektierenden Spiegel (M2A, M2B, M2C, M2D) aufweist, wobei der erste und zweite Spiegel so angeordnet sind, dass an dem Ausgang des optischen Resonators (3A, 3B, 3C, 3D) aus einem einzigen einfallenden elektromagnetischen Impuls eine Folge von emittierten elektromagnetischen Impulsen entsteht,
**dadurch gekennzeichnet, dass** die Lichtleitfaser (F) ein erstes Teilstück (F1) aufweist, das zwischen dem Generator (2) und dem ersten Spiegel angeordnet ist, ein zweites Teilstück (F2), das zwischen dem ersten und zweiten Spiegel angeordnet ist, und ein drittes Teilstück (F3), das hinter dem zweiten Spiegel angeordnet ist, und dass die Länge des zweiten Teilstücks (F2) der Lichtleitfaser (F), das zwischen dem ersten und zweiten Spiegel angeordnet ist, und das Verhältnis Transmission/Reflexion des ersten und zweiten Spiegels so beschaffen sind, dass die elektromagnetische Impulsfolge emittierte elektromagnetische Impulse aufweist, deren Raumwinkel der Emission und Emissionsfläche variabel und genau definiert sind.

2. Vorrichtung nach Anspruch 1,
**dadurch gekennzeichnet, dass** wenigstens einer der ersten und zweiten Spiegel (M1A, M2A) direkt mit einander gegenüberliegenden Seiten mit zwei Teilstücken (F1, F2, F3) der Lichtleitfaser (F) verbunden ist.

3. Vorrichtung nach Anspruch 1,
**dadurch gekennzeichnet, dass** wenigstens einer der ersten und zweiten Spiegel (M1B, M2B, M1C, M2C, M1D, M2D) mittels eines beigeordneten Mittels zur optischen Ankopplung (C1 B, C2B, C1C, C2C, C1D, C2D) mit zwei Teilstücken (F1, F2, F3) der Lichtleitfaser (F) verbunden ist.

4. Vorrichtung nach Anspruch 3,
**dadurch gekennzeichnet, dass** das Mittel zur optischen Ankopplung (C1B, C2B) zwei Linsen (4 bis 7) aufweist, die die beiden Teilstücke (F1, F2, F3) der Lichtleitfaser (F) optisch miteinander verbinden, wobei der dem Mittel zur optischen Ankopplung (C1B, C2B) beigeordnete Spiegel (M1B, M2B) zwischen den Linsen (4 bis 7) angeordnet ist.

5. Vorrichtung nach Anspruch 3,
**dadurch gekennzeichnet, dass** das Mittel zur optischen Ankopplung (C1C, C2C) zwei Linsen (8, 9; 10, 11) mit Viertelwellengradientenindex aufweist, die mit zwei Teilstücken der Lichtleitfaser (F) verbunden sind und zwischen denen der zugehörige Spiegel (M1C, M2C) angeordnet ist.

6. Vorrichtung nach Anspruch 3,
**dadurch gekennzeichnet, dass** das Mittel zur optischen Ankopplung (C1D, C2D) eine Linse (12, 13) mit Halbwellengradientenindex aufweist, und dass der zugehörige Spiegel (M1D, M2D) an der Vorderseite (14, 15) des Mittels zur optischen Ankopplung im Inneren des optischen Resonators (3D) angeordnet ist.

7. Vorrichtung nach einem der vorstehenden Ansprüche,
**dadurch gekennzeichnet, dass** sie Mittel (16) aufweist, die verhindern, dass ein von dem Generator (2) erzeugter elektromagnetischer Impuls zu dem Generator (2) zurückkehrt.

8. Vorrichtung nach einem der vorstehenden Ansprüche,
**dadurch gekennzeichnet, dass** der Generator (2) geeignet ist, wenigstens zwei Impulse von unterschiedlicher Wellenlänge zu erzeugen.

9. Prüfsystem mit:
- einer Lichtquelle (1 D), die geeignet ist, wenigstens einen elektromagnetischen Impuls zu emittieren;
- einem Fotoempfänger (20), der geeignet ist, Eigenschaften eines elektromagnetischen Impulses, der von der Lichtquelle (1 D) emittiert und von einem Lichtleitfaserelement (19, 21) übertragen wird, zu messen; und
- Mitteln (22, 24) zum Erfassen, zum Speichern und zum Verarbeiten von Daten, die die Messungen empfangen, die von dem Fotoempfänger (20) erzeugt werden,
**dadurch gekennzeichnet, dass** die Lichtquelle eine Vorrichtung (1 D) aufweist, die unter einem der Ansprüche 1 bis 8 beschrieben wird, und dass die Mittel (22, 24) zum Erfassen, zum Speichern und zum Verarbeiten von Daten die von dem Fotoempfänger (20) erzeugten Messungen empfangen, sowohl für ein zu prüfendes Lichtleitfaserelement (19) als auch für ein Referenz-Lichtleitfaserelement (21), und anhand dieser Messungen die Verluste des zu prüfenden Lichtleitfaserelements (19) bestimmen.

10. Prüfsystem nach Anspruch 9,
**dadurch gekennzeichnet, dass** die Lichtleitfaser (F) der Vorrichtung (1 D) zur Emission von elektromagnetischen Impulsen wenigstens zwei Eigenschaften aufweist, den Kerndurchmesser und die numerische Apertur, die vorbestimmt sind, und dass eine der Eigenschaften der Lichtleitfaser (F) mit jener des zu prüfenden Lichtleitfaserelements (19) identisch ist und die andere sich von ihr unterscheidet.

11. Prüfsystem nach einem der Ansprüche 9 und 10,
**dadurch gekennzeichnet, dass** es ferner eine Universalsteckverbindung aufweist, die es erlaubt, das zu prüfende Lichtleitfaserelement (19) und das Referenz-Lichtleitfaserelement (21) mit dem dritten Lichtleitfaser-Teilstück (F3) und einem Lichtleitfaser-Teilstück (F4), das mit dem Fotoempfänger (20) einstückig ist, zu verbinden.

12. Verfahren zum Bestimmen des Wertes von wenigstens einem charakteristischen Parameter eines Lichtleitfaserelements, Verfahren demgemäß:
a) man mittels der Vorrichtung, die unter einem der Ansprüche 1 bis 8 beschrieben wird, eine Folge von elektromagnetischen Impulsen erzeugt, von denen wenigstens einige für wenigstens eine optische Eigenschaft unterschiedliche Werte aufweisen, und man die elektromagnetische Impulsfolge in ein Lichtleitfaserelement (19) emittiert;
b) man Messungen bezüglich der elektromagnetischen Impulsfolge ausführt, die von dem Lichtleitfaserelement (19) übertragen wird; und
c) man den Wert des charakteristischen Parameters für jeden der verschiedenen elektromagnetischen Impulse der Impulsfolge bestimmt.
